(19) Europäisches Patentamt / European Patent Office / Office européen des brevets

(11) **EP 1 883 549 B1**

(12) **FASCICULE DE BREVET EUROPEEN**

(45) Date de publication et mention
de la délivrance du brevet:
**07.09.2011 Bulletin 2011/36**

(21) Numéro de dépôt: **06794408.2**

(22) Date de dépôt: **10.05.2006**

(51) Int Cl.:
*B60G 21/055* (2006.01)   *B60G 17/016* (2006.01)

(86) Numéro de dépôt international:
**PCT/FR2006/050423**

(87) Numéro de publication internationale:
**WO 2007/003800 (11.01.2007 Gazette 2007/02)**

(54) **PROCEDE DE COMMANDE D'AU MOINS UN ACTIONNEUR DE BARRES ANTI-ROULIS A BORD D'UN VEHICULE**

VERFAHREN ZUR STEUERUNG VON MINDESTENS EINEM STABILISATORSTANGENANTRIEB AN BORD EINES FAHRZEUGES

METHOD OF CONTROLLING AT LEAST ONE ANTI-ROLL BAR ACTUATOR ON BOARD A VEHICLE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.05.2005 FR 0504671**

(43) Date de publication de la demande:
**06.02.2008 Bulletin 2008/06**

(73) Titulaire: **Renault SAS**
**92100 Boulogne Billancourt (FR)**

(72) Inventeur: **POTHIN, Richard**
**F-78760 Jouars Pontchartrain (FR)**

(74) Mandataire: **Religieux, Vincent**
**Renault Technocentre**
**Sce 00267 - TCR GRA 2 36**
**1, avenue du Golf**
**78288 Guyancourt Cedex (FR)**

(56) Documents cités:
**EP-A- 1 564 043      EP-A- 1 568 521**
**US-A1- 2004 176 890    US-B1- 6 425 585**

EP 1 883 549 B1

**Description**

L'invention concerne la commande des véhicules automobiles, et en particulier la commande des systèmes d'anti-roulis actifs qui permettent de contrôler la réponse statique en lacet du véhicule.

On cherche aujourd'hui à améliorer le comportement des véhicules et le confort des passagers via le contrôle du comportement du véhicule en lacet, par exemple durant un virage ou plusieurs virages consécutifs.

On sait en effet que les véhicules sont conçus en général de manière à présenter le comportement le plus stable possible quels que soient les commandes fournies par le conducteur ou l'état de la chaussée. Cependant, certaines situations peuvent engendrer une perte de contrôle du véhicule comme par exemple un évitement d'obstacles, simple ou double. Les pertes de contrôle dans ce cas sont souvent dues à une réponse du véhicule inadaptée car trop vive, pas assez amortie, ou encore peu prévisible.

Par ailleurs, on cherche à améliorer la sensation de sécurité ainsi que le confort et le plaisir de conduite.

On connaît à cette fin des véhicules automobiles dotés de barres anti-roulis actives munies d'actionneurs. Un tel système peut être piloté de façon à améliorer pour chaque vitesse du véhicule la réponse en lacet du véhicule suite à un coup de volant donné par le conducteur. Un tel véhicule est par exemple présenté dans le document EP-1 304 270.

Il est également connu, par les documents EP 1 568 521 et EP 1 564 043, un dispositif de stabilisation du véhicule comportant un actionneur électromagnétique anti-roulis disposé sur chaque train, et commandé par une unité de contrôle en fonction de différents paramètres tels que la vitesse de rotation des roues, l'angle de braquage, l'accélération longitudinale, l'accélération latérale, la vitesse longitudinale, ainsi que l'amplitude du mouvement de lacet.

Par ailleurs, le document US 6,425,585 divulgue un système de stabilisation anti-roulis de conception entièrement électromécanique, la commande de ce système étant déterminée en fonction de l'accélération latérale du véhicule, de la vitesse de rotation des roues, ainsi que de la vitesse de déplacement longitudinale du véhicule. Par ailleurs, un coefficient de distribution du couple anti-roulis est pris en compte afin de répartir entre les trains avant et arrière le couple transmis par les actionneurs anti-roulis.

On connait également, par le document US 2004/176890, qui forme l'état de la technique le plus proche selon le préambule de la revendication 1, une méthode pour améliorer le comportement anti-roulis des véhicules, prévoyant une commande d'actionneurs anti-roulis qui est notamment fonction de l'accélération latérale, soit mesurée, soit calculée, le calcul étant obtenu à partir de l'angle d'inclinaison des roues et de la vitesse de déplacement longitudinal du véhicule obtenue à partir de la mesure de la vitesse de rotation des roues d'au moins un train.

Un but de l'invention est d'améliorer encore les stratégies de commande à ce sujet.

A cet effet, on prévoit selon l'invention un procédé de commande d'un véhicule, dans lequel on commande au moins un actionneur d'anti-roulis en fonction d'une mesure d'une accélération latérale du véhicule.

Le procédé selon l'invention pourra présenter en outre au moins l'une quelconque des caractéristiques suivantes :

- on effectue la commande en fonction d'une vitesse longitudinale du véhicule ;
- on détermine une vitesse longitudinale du véhicule à partir de données fournies par un système d'antiblocage de roues ;
- on effectue la commande en fonction d'une valeur d'un gain statique d'une fonction de transfert entre un angle d'un organe de commande de direction du véhicule et une vitesse de lacet du véhicule ;
- on détermine le gain en fonction d'une vitesse longitudinale du véhicule ;
- le gain statique est un gain statique de consigne ;
- on détermine une valeur de commande du ou de chaque actionneur au moyen d'une cartographie ;
- on détermine la valeur de commande de sorte qu'elle est comprise entre deux bornes prédéterminées ; et
- on détermine un coefficient de répartition d'anti-roulis entre des actionneurs d'anti-roulis avant et arrière.

On prévoit également selon l'invention un véhicule comprenant :

- au moins un actionneur anti-roulis ; et
- un organe de commande agencé pour commander le ou chaque actionneur en fonction d'une mesure d'une accélération latérale du véhicule.

D'autres caractéristiques et avantages de l'invention apparaîtront encore dans la description suivante d'un mode préféré de réalisation donné à titre d'exemple non limitatif en référence aux dessins annexés sur lesquels :

- la figure 1 est un graphique illustrant l'évolution de la rigidité de dérive d'un pneumatique en fonction de l'effort vertical appliqué sur le pneumatique ;
- la figure 2 illustre sur deux graphiques les effets d'un report de charge sur la rigidité de dérive d'un train d'un véhicule ;

- la figure 3 est un exemple d'une cartographie saturée mise en oeuvre dans le cadre du procédé de l'invention pour une vitesse donnée ;
- la figure 4 est un organigramme montrant le déroulement général du procédé dans le présent mode de mise en oeuvre de l'invention ; et
- la figure 5 illustre l'étape de paramétrage du lien statique dans le procédé de la figure 4.

On va décrire ci-après un mode préféré de mise en oeuvre du procédé de l'invention.

Le procédé est mis en oeuvre sur un véhicule automobile à quatre roues doté à l'avant et l'arrière de barres anti-roulis actives associées à des actionneurs afin d'avoir une rigidité modifiable et commandable. Les barres et les actionneurs sont d'un type connu en soi. Le véhicule comprend une unité centrale apte à commander différents organes du véhicule parmi lesquels les actionneurs associés aux barres anti-roulis.

On va tout d'abord présenter les fondements théoriques du procédé mis en oeuvre. On convient des notations suivantes :

- $M$ (kg) : Masse totale du véhicule

- $I_{zz}$ (kg.m2) : Inertie de la caisse du véhicule autour d'un axe vertical passant par son centre de gravité

- $L$ (m) : Empattement du véhicule

- $L_1$ (m) : Distance du centre de gravité à l'essieu avant

- $L_2$ (m) : Distance du centre de gravité à l'essieu arrière

- $E_1$ (m) : Voie de l'essieu avant, i.e. distance entre les 2 roues avant

- $E_2$ (m) : Voie de l'essieu arrière

- $h$ (m) : Hauteur du centre de gravité par rapport au sol

- $\alpha_1$ (rad) : Angle de braquage des roues avant, i.e. angle que font les roues avant avec l'axe longitudinal du véhicule

- $V$ (m/s) : Vitesse du véhicule

- $\gamma_T$ (m/s$^2$) : Accélération latérale subie par le véhicule au centre de gravité

- $\dot{\psi}$ (rad/s) : Vitesse de lacet du véhicule

- $D_1, D_2$ : Rigidités de dérive du train avant et arrière

- $D_{11}, D_{12}$ : Rigidités de dérive du pneu avant gauche et avant droit

- $F_{Z,avant}, F_{Z,arriere}$ : Effort vertical sur les pneus avant et arrière en l'absence d'accélération latérale.

- $\Delta F_{Z,avant}, \Delta F_{Z,arriere}$ : Reports de charge sur l'essieu avant et arrière

- $K_{\theta 1}, K_{\theta 2}$ (N.m/rad) : Raideurs en roulis du train avant et arrière

- $k$ (-) : Répartition de l'action antiroulis

Pour commencer, on part de la fonction de transfert entre l'angle de braquage des roues $\alpha_1$ et la vitesse de lacet du véhicule $\dot{\psi}$ :

$$\frac{\dot{\psi}}{\alpha_1} = \frac{K_0 \cdot (1 + \tau_1 s)}{s^2 + 2 \cdot \xi \cdot \omega_n s + \omega_n{}^2} \qquad (1)$$

Les caractéristiques de cette fonction de transfert dépendent des paramètres du véhicule :

$$K_0 = \frac{D_1 D_2 L}{MVI_{zz}}$$

$$\tau_1 = \frac{MVL_1}{D_2 L}$$

$$\omega_n = \sqrt{\frac{MV^2(D_2 L_2 - D_1 L_1) + D_1 D_2 L^2}{MV^2 I_{zz}}}$$

$$\xi = \frac{1}{2}\left(M\left(D_1 L_1^{\ 2} + D_2 L_2^{\ 2}\right) + I_{zz}(D_1 + D_2)\right) \cdot \sqrt{\frac{1}{MI_{zz}\left(MV^2(D_2 L_2 - D_1 L_1) + D_1 D_2 L^2\right)}}$$

On va s'intéresser particulièrement au gain statique de cette fonction de transfert :

$$G_0 = \frac{K_0}{\omega_n^{\ 2}} = \frac{D_1 D_2 LV}{MV^2(D_2 L_2 - D_1 L_1) + D_1 D_2 L^2} \qquad (2)$$

On observe que ce gain statique $G_0$ dépend directement des rigidités de dérive des trains $D_1$ et $D_2$. On va montrer que la répartition d'antiroulis permet de modifier les rigidités de dérive et donc de modifier la réponse statique du véhicule en lacet.
Définissons la répartition de raideur antiroulis :

$$k = \frac{K_{\theta 2}}{K_{\theta 1} + K_{\theta 2}}$$

On peut exprimer les reports de charge à l'avant et à l'arrière en fonction de k et de l'accélération latérale $\gamma_T$ :

$$\Delta F_{Z,avant} = \frac{2 \cdot (1-k) \cdot h \cdot M\gamma_T}{E_1} = g_1(k, \gamma_T) \qquad (3)$$

$$\Delta F_{Z,arriere} = \frac{2 \cdot k \cdot h \cdot M\gamma_T}{E_2} = g_2(k, \gamma_T) \qquad (4)$$

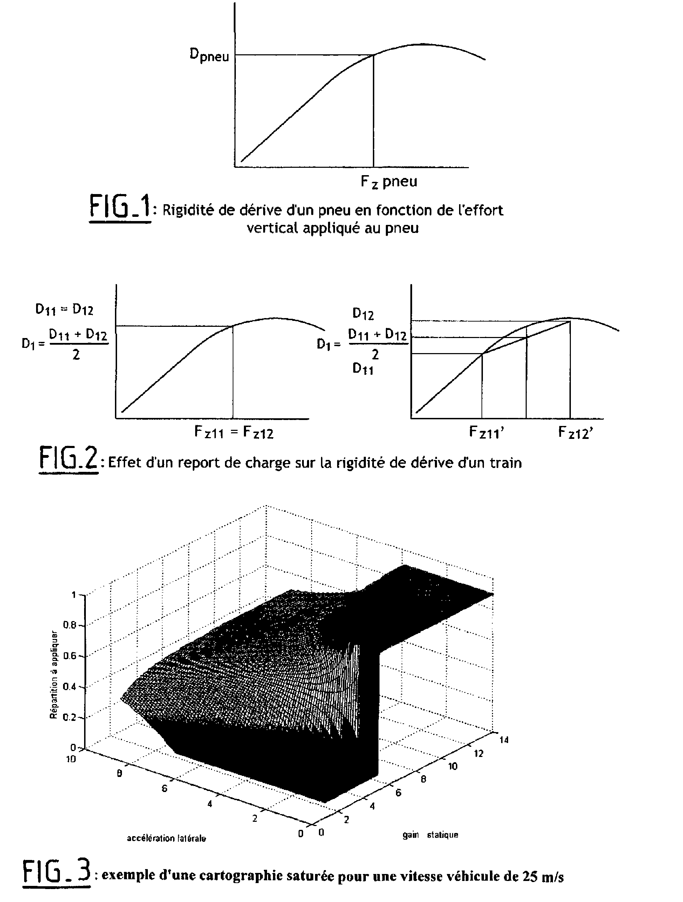

Par ailleurs, les rigidités de dérive de chaque pneu dépendent de l'effort vertical qui est appliqué au pneu. La courbe est non linéaire, un exemple est représenté à la figure 1. On peut approcher cette courbe par exemple à l'aide d'une expression polynomiale.
La rigidité d'un train est obtenue en faisant la somme des rigidités des deux pneus du train. Ainsi, si le train est soumis à un report de charge, sa rigidité s'en trouve modifiée. A la figure 2, on observe à gauche une situation sans report de charge et à droite une situation avec report de charge.

De façon plus formelle, on peut écrire :

$$D_1 = (1/2) * \left[ f\left( \frac{F_{Z,avant}}{2} + \frac{\Delta F_{Z,avant}}{2} \right) + f\left( \frac{F_{Z,avant}}{2} - \frac{\Delta F_{Z,avant}}{2} \right) \right] = f'\left( \Delta F_{Z,avant} \right)$$

**(5)**

$$D_2 = (1/2) * \left[ f\left( \frac{F_{Z,arrière}}{2} + \frac{\Delta F_{Z,arriere}}{2} \right) + f\left( \frac{F_{Z,arrière}}{2} - \frac{\Delta F_{Z,arriere}}{2} \right) \right] = f'\left( \Delta F_{Z,arriere} \right)$$

**(6)**

En introduisant les expressions (3) et (4) dans (5) et (6), on obtient :

$$D_1 = f'\left( \Delta F_{Z,avant} \right) = f'\left( g_1(k, \gamma_T) \right) = D_1(k, \gamma_T) \qquad \textbf{(7)}$$

$$D_2 = f'\left( \Delta F_{Z,arriere} \right) = f'\left( g_2(k, \gamma_T) \right) = D_2(k, \gamma_T) \qquad \textbf{(8)}$$

Et enfin, en introduisant (7) et (8) dans (2), on arrive à :

$$G_0 = G_0\left( D_1(k, \gamma_T), D_2(k, \gamma_T), V \right) = G_0(k, \gamma_T, V)$$

On voit donc apparaître une relation exprimant l'influence de l'accélération latérale, de la vitesse et surtout de la répartition d'antiroulis sur la réponse statique du véhicule. On peut ensuite inverser cette relation pour obtenir la répartition d'antiroulis à appliquer afin d'avoir le gain statique désiré $G_{0,d}$ (pour la fonction de transfert (1)), connaissant l'accélération latérale $\gamma_T$ et la vitesse du véhicule V :

$$k = k\left( G_{0,d}, \gamma_T, V \right) \qquad \textbf{(9)}$$

Ainsi, on obtient une commande permettant de commander la réponse statique du véhicule en fonction de la situation, i.e. en fonction de l'accélération latérale $\gamma_T$ et de la vitesse du véhicule V.

Après cela, il est encore nécessaire de saturer cette commande de façon à ce que les valeurs soient applicables. En effet, la répartition étant effectuée à partir de barres antiroulis actives, les ressorts des suspensions contribuent aussi à la raideur de roulis du véhicule et à sa répartition. On ne pourra donc pas atteindre les valeurs extrêmes proches des répartitions k=0 (pas de raideur de roulis à l'arrière) ou k=1 (pas de raideur de roulis à l'avant). On s'arrangera donc pour saturer la répartition commandée, par exemple entre 0,1 et 0,9. Autrement dit, si la valeur k calculée excède 0,9, on la ramène à 0,9. Inversement, si elle est inférieure à 0,1, on la relève à 0,1.

Le principe de la commande réside dans l'expression (9). On peut développer tous les calculs pour obtenir cette expression de façon analytique. On peut aussi réaliser des calculs numériques pour un grand nombre de valeurs de $G_{0,d}$, $\gamma_T$ et V. On obtient alors une cartographie à trois dimensions en entrée (vitesse, accélération latérale et gain statique) qui permet d'obtenir suivant l'axe vertical z la commande k à appliquer. Un exemple d'une telle cartographie pour une vitesse donnée de 25 m/s est représenté à la figure 3. La cartographie représentée a été saturée entre 0,1 et 0,9, conformément à ce qui a été mentionné plus haut.

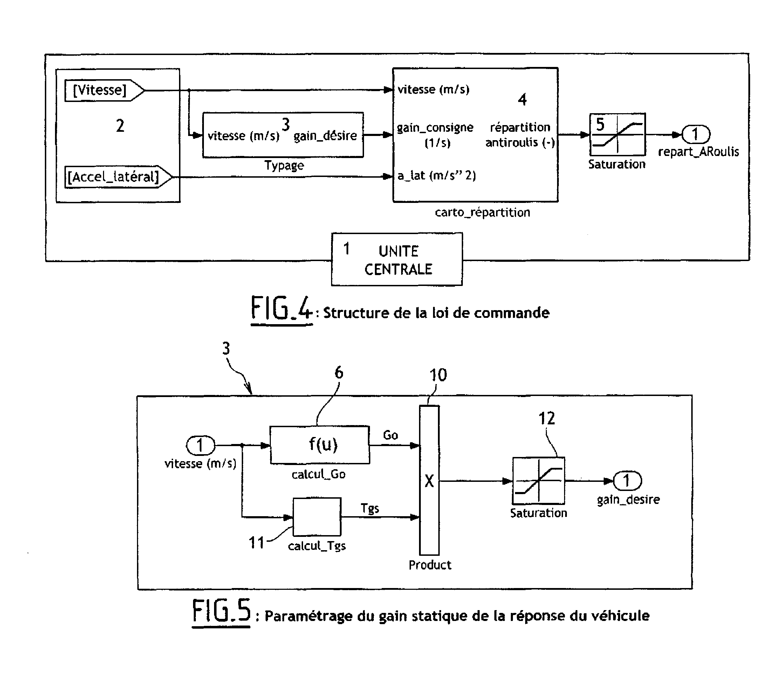

En outre, la mise en oeuvre de la commande à l'aide de ce type de cartographie est représentée à la figure 4.

L'intégration de la stratégie de commande qui permet de typer la réponse statique du véhicule en lacet s'effectue au niveau de l'unité centrale du véhicule comme illustré à la figure 4.

Le schéma bloc de la figure 4 a été décomposé en quatre parties :

- Les signaux d'entrée (bloc n˚2)
- Le paramétrage du gain statique de la réponse du véhicule (bloc n˚3)
- La cartographie de gains permettant le calcul de la commande (bloc n˚4)
- La saturation de la commande (bloc n˚5)

Dans le bloc 2 correspondant aux signaux d'entrée, la commande nécessite les mesures ou les signaux suivants :

- La vitesse longitudinale du véhicule : ce signal est, par exemple, obtenu en faisant la moyenne de la vitesse fournie par des systèmes d'antiblocage (ABS) des roues d'un essieu.

- L'accélération latérale subie par le véhicule : ce signal peut, par exemple, être obtenu par un capteur de type accéléromètre.

Au bloc 3 a lieu le paramétrage du gain statique de la réponse du véhicule. On trouvera à la figure 5 le détail du bloc 3. Ce bloc calcule le gain statique désiré en fonction de la vitesse longitudinale V du véhicule comme indiqué au bloc 6. Pour ce faire, on se base sur le gain statique de la fonction de transfert entre l'angle au volant et la vitesse de lacet. Pour rappel, ce gain statique s'écrit comme suit :

$$G_0 = \frac{D_1 D_2 LV}{MV^2 \left(D_2 L_2 - D_1 L_1\right) + D_1 D_2 L^2}$$

Cette expression représente la réponse statique du véhicule de référence et peut être calculée en fonction de la vitesse du véhicule.

Ensuite, comme illustré au bloc 10, on multiplie directement ce gain statique de départ par un signal de typage Tgs. Ainsi, le gain statique désiré $G_{0,d}$ sera directement égal à Tgs x $G_0$ et suivra une règle prédéterminée telle que :

- Si *Tgs* est égal à 1, le comportement du véhicule reste inchangé,
- Si *Tgs* est supérieur à 1, on augmente la réponse statique du véhicule,
- Si *Tgs* est inférieur à 1, on diminue la réponse statique du véhicule.

Ce paramètre *Tgs* est ici variable en fonction de la vitesse du véhicule. On caractérisera donc auparavant le typage du véhicule que l'on désire par une courbe représentant le paramètre *Tgs* en fonction de la vitesse véhicule V comme illustré au bloc 11. Finalement, cela revient à :

$$G_{0,d}(V) = G_0(V) \cdot Tgs(V)$$

Le gain statique désiré obtenu sera ensuite saturé au bloc 12 pour éviter de demander des commandes trop fortes et inatteignables.

Sur la figure 4, la cartographie de gains est mise en oeuvre au bloc 4. Ce bloc permet le calcul de la répartition antiroulis à appliquer en fonction de la vitesse longitudinale du véhicule, l'accélération latérale et le gain statique désiré. Cette cartographie résulte de l'expression (9) ci-dessus. En réalité, ceci revient à réaliser une commande de type :

$$k = C_0 + C_1 \cdot V + C_2 \cdot \gamma_T + C_3 \cdot G_{0,d}$$

Enfin, la saturation de la commande a lieu au bloc 5. Comme expliqué plus haut, ce bloc permet de saturer la répartition d'antiroulis commandée afin de rester dans les limites applicables par le système antiroulis. On impose simplement à la sortie de rester entre une borne inférieure et une borne supérieure.

L'invention permet, sur un véhicule équipé d'un dispositif anti-roulis actif, de typer en fonction de sa vitesse les réponses statiques en lacet du véhicule. Cette invention fournit la loi de commande qui pilote le système d'anti-roulis actif et permet, grâce à une stratégie basée sur la mesure de l'accélération latérale, de régler la réponse statique du véhicule en lacet, suite par exemple à un coup de volant. Elle s'intègre comme on l'a vu dans un système global dont l'architecture matérielle comprend au moins un dispositif d'anti-roulis piloté, un ou des capteurs permettant d'estimer l'accélération latérale, des moyens pour déterminer la vitesse longitudinale du véhicule et un ou plusieurs moyens électroniques de calcul.

L'invention offre une stratégie de commande de la répartition avant-arrière de l'action des barres anti-roulis actives pour contrôler la réponse statique du véhicule en lacet.

Enfin, l'invention présente les avantages suivants :

- La stratégie de commande présente une structure basée sur la mesure de l'accélération latérale du véhicule ;
- la stratégie de commande permet de régler la partie statique de la réponse latérale du véhicule à un coup de volant. Le réglage final permet par exemple d'optimiser la manoeuvrabilité à basse vitesse ;
- la stratégie de commande tient compte de la vitesse du véhicule et réagit différemment en fonction de celle-ci ;
- la stratégie de commande génère une consigne de répartition d'antiroulis en vue de son application par un actionneur antiroulis, comme par exemple des barres antiroulis pilotables sur chaque essieu du véhicule ;
- la saturation de la commande permet de garder celle-ci dans des limites telles qu'elle puisse réellement être appliquée par l'actionneur ;
- la stratégie de commande n'utilise pas de capteur de vitesse de lacet, permettant ainsi de limiter le coût et la complexité du système ;
- la stratégie de commande peut servir de système secondaire de secours pour d'autres systèmes de contrôle latéral utilisant un capteur de vitesse de lacet, comme par exemple l'ESP (Programme de stabilité électronique ou Electronic Stability Program) ; et
- la mise au point de la stratégie est facile et intuitive car le paramètre de réglage est lié à la performance nominale du véhicule. Un paramètre de réglage égal à "1" ne modifie pas le comportement du véhicule, alors qu'un paramètre supérieur (respectivement inférieur) à "1" rend le comportement plus (respectivement moins) direct.

Bien entendu, on pourra apporter à l'invention de nombreuses modifications sans sortir du cadre de celle-ci.

**Revendications**

1. Procédé de commande d'un véhicule où l'on commande au moins un actionneur d'anti-roulis en fonction d'une mesure d'une accélération latérale du véhicule, **caractérisé en ce qu'**on effectue la commande en fonction d'une valeur d'un gain statique d'une fonction de transfert entre un angle d'un organe de commande de direction du véhicule et une vitesse de lacet du véhicule.

2. Procédé selon la revendication précédente, **caractérisé en ce qu'**on effectue la commande en fonction d'une vitesse longitudinale du véhicule.

3. Procédé selon l'une quelconque des revendications précédentes, **caractérisé en ce qu'**on détermine une vitesse longitudinale du véhicule à partir de données fournies par un système d'antiblocage de roues.

4. Procédé selon l'une quelconque des revendications précédentes, **caractérisé en ce qu'**on détermine le gain en fonction d'une vitesse longitudinale du véhicule.

5. Procédé selon l'une quelconque des revendications précédentes, **caractérisé en ce que** le gain statique est un gain statique de consigne.

6. Procédé selon l'une quelconque des revendications précédentes, **caractérisé en ce qu'**on détermine une valeur de commande du ou de chaque actionneur au moyen d'une cartographie.

7. Procédé selon la revendication précédente, **caractérisé en ce qu'**on détermine la valeur de commande de sorte qu'elle est comprise entre deux bornes prédéterminées.

**8.** Procédé selon l'une quelconque des revendications précédentes, **caractérisé en ce qu'**on détermine un coefficient de répartition d'anti-roulis entre des actionneurs d'anti-roulis avant et arrière.

**9.** Véhicule comprenant :

- au moins un actionneur anti-roulis ; et
- un organe de commande agencé pour commander le ou chaque actionneur en fonction d'une mesure d'une accélération latérale du véhicule,

**caractérisé en ce que** l'organe de commande est agencé pour commander le ou chaque actionneur en fonction d'une valeur d'un gain statique d'une fonction de transfert entre un angle d'un organe de commande de direction du véhicule et une vitesse de lacet du véhicule.

**Claims**

**1.** Method of controlling a vehicle, in which at least one anti-roll actuator is controlled as a function of a measurement of a lateral acceleration of the vehicle, **characterized in that** control is performed as a function of a value of a static gain of a transfer function relating an angle of a steering control of the vehicle and a rate of yaw of the vehicle.

**2.** Method according to the preceding claim, **characterized in that** control is performed as a function of a longitudinal speed of the vehicle.

**3.** Method according to either of the preceding claims, **characterized in that** a longitudinal speed of the vehicle is determined on the basis of data provided by an antilock braking system.

**4.** Method according to any one of the preceding claims, **characterized in that** the gain is determined as a function of a longitudinal speed of the vehicle.

**5.** Method according to any one of the preceding claims, **characterized in that** the static gain is a reference static gain.

**6.** Method according to any one of the preceding claims, **characterized in that** a control value to be input into the or each actuator is determined using a map.

**7.** Method according to the preceding claim, **characterized in that** the control value is determined in such a way that it falls between two predetermined limits.

**8.** Method according to any one of the preceding claims, **characterized in that** an anti-roll apportioning factor is determined so that the anti-roll effect can be split between front and rear anti-roll actuators.

**9.** Vehicle comprising:

- at least one anti-roll actuator; and
- a control member,

designed to control the or each actuator as a function of a measurement of a lateral acceleration of the vehicle, **characterized in that** the control member is designed to control the or each actuator as a function of a value of a static gain of a transfer function relating an angle of a steering control of the vehicle and a rate of yaw of the vehicle.

**Patentansprüche**

**1.** Verfahren zum Steuern eines Fahrzeugs, wobei wenigstens ein Wankverhinderungsaktor als Funktion einer Messung einer Querbeschleunigung des Fahrzeugs gesteuert wird, **dadurch gekennzeichnet, dass** die Steuerung als Funktion eines Werts einer statischen Verstärkung einer Übertragungsfunktion zwischen einem Winkel eines Lenksteuerorgans des Fahrzeugs und einer Giergeschwindigkeit des Fahrzeugs ausgeführt wird.

**2.** Verfahren nach dem vorhergehenden Anspruch, **dadurch gekennzeichnet, dass** die Steuerung als Funktion einer Längsgeschwindigkeit des Fahrzeugs ausgeführt wird.

3. Verfahren nach einem der vorhergehenden Ansprüche, **dadurch gekennzeichnet, dass** eine Längsgeschwindigkeit des Fahrzeugs anhand von Daten bestimmt wird, die von einem Antiblockiersystem der Räder geliefert werden.

4. Verfahren nach einem der vorhergehenden Ansprüche, **dadurch gekennzeichnet, dass** die Verstärkung als Funktion einer Längsgeschwindigkeit des Fahrzeugs bestimmt wird.

5. Verfahren nach einem der vorhergehenden Ansprüche, **dadurch gekennzeichnet, dass** die statische Verstärkung eine statische Soll-Verstärkung ist.

6. Verfahren nach einem der vorhergehenden Ansprüche, **dadurch gekennzeichnet, dass** ein Steuerwert des oder jedes Aktors mittels eines Kennfelds bestimmt wird.

7. Verfahren nach dem vorhergehenden Anspruch, **dadurch gekennzeichnet, dass** der Steuerwert in der Weise bestimmt wird, dass er zwischen zwei vorgegebenen Grenzen liegt.

8. Verfahren nach einem der vorhergehenden Ansprüche, **dadurch gekennzeichnet, dass** ein Wankverhinderungs-Verteilungskoeffizient zwischen vorderen und hinteren Wankverhinderungs-Aktoren bestimmt wird.

9. Fahrzeug, das umfasst:

   - wenigstens einen Wankverhinderungs-Aktor; und
   - ein Steuerorgan, das dazu ausgelegt ist, den oder jeden Aktor als Funktion einer Messung einer Querbeschleunigung des Fahrzeugs zu steuern,

   **dadurch gekennzeichnet, dass** das Steuerorgan dazu ausgelegt ist, den oder jeden Aktor als Funktion eines Werts einer statischen Verstärkung einer Übertragungsfunktion zwischen einem Winkel eines Lenksteuerorgans des Fahrzeugs und einer Giergeschwindigkeit des Fahrzeugs zu steuern.

FIG_1 : Rigidité de dérive d'un pneu en fonction de l'effort vertical appliqué au pneu

FIG.2 : Effet d'un report de charge sur la rigidité de dérive d'un train

FIG_3 : exemple d'une cartographie saturée pour une vitesse véhicule de 25 m/s

10

$\underline{\text{FIG.4}}$ : Structure de la loi de commande

$\underline{\text{FIG.5}}$ : Paramétrage du gain statique de la réponse du véhicule

EP 1 883 549 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1304270 A
- EP 1568521 A
- EP 1564043 A

- US 6425585 B
- US 2004176890 A